# EUROPEAN PATENT SPECIFICATION

(11) **EP 3 406 518 B1**
(45) Date of publication and mention of the grant of the patent: **13.05.2020**
(21) Application number: 18162877.7
(22) Date of filing: 20.03.2018
(51) Int. Cl.: B64C 13/50, B64C 27/78, G05D 1/08

(54) **LINEAR SENSOR FEEL MODULE FOR AIRCRAFT CONTROLS**
LINEARSENSOR-FÜHLMODUL FÜR FLUGZEUGSTEUERUNGEN
MODULE DE SENSATION DE CAPTEUR LINÉAIRE POUR DES COMMANDES D'AVION

(30) Priority: 25.05.2017 US 201762511045 P
(43) Date of publication of application: 28.11.2018
(73) Proprietor: Sikorsky Aircraft Corporation, Stratford, CT 06615 (US)
(72) Inventor: Marini, Christopher Joseph, Cheshire, CT 06410 (US); Shields, Paul Michael, New Haven, CT 06511 (US)
(74) Representative: Schmitt-Nilson Schraud Waibel Wohlfrom Patentanwälte Partnerschaft mbB

(56) References cited:
- US-A- 3 173 631
- US-A- 5 058 825
- US-A- 5 868 359
- US-A1- 2007 205 333
- US-A1- 2012 025 014
- US-A1- 2014 077 025

## Description

This invention was made with Government support under HR0011-15-9-0004 awarded by the Defense Advanced Research Projects Agency (DARPA). The Government has certain rights in the invention.

Exemplary embodiments of the disclosure generally relate to a rotary wing aircraft, and more particularly, to a primary flight control input displacement for a Fly-By-Wire (FBW) flight control system.

The majority of helicopters utilize main rotor assembly and an anti-torque tail rotor assembly. The tail rotor assembly has proven to be efficient and reliable for providing lateral thrust to counteract induced torque generated by the main rotor assembly and to provide yaw directional control of the helicopter in hover, transitional, low, and high speed flight regimes. Systems to steer the tail rotor assembly are shown, e.g., by U.S. patents No. 5,058,825 A, No. 5,868,359 A and No. 3,173,631 A as well as by U.S. patent applications No. US 2012/025014 A1 and No. US 2014/077025 A1.

Control of the anti-torque tail rotor assembly is conventionally achieved through a relatively large pedal system which provides control proportional to the pedal displacement. The pilot must typically constantly manipulate the pedals to coordinate changes in power, bank angle, or speed. This may result in a significant pilot workload.

Fly-By-Wire (FBW) flight control systems are becoming more common because they provide substantial improvements in reducing the pilot's workload. Although significant benefits are realized with FBW flight control systems, conventional relatively large displacement FBW pedal systems have not utilized FBW control systems to full advantage. An exemplary FBW system is shown in US 2007/205333 A1, that discloses a pedal system particularly tailored to a fly-by-wire flight control system that includes a double gradient linakge assembly. The double gradient linkage assembly includes a damper system and a spring system that improves yaw axis (azimuth) control of the aircraft. Control is only required when a change in the yaw axis state is demanded. Since only minimal displacement inputs to such FBW flight control system is required, the travel of the pedals are exceeding compact, such that pilot workload is significantly reduced through the reduction in the frequency and magnitude of aircraft control inputs.

According to the invention as defined in claim 1, a rotary wing aircraft includes at least one controllable component and a fly-by-wire flight control system for driving the at least one controllable component. A flight control includes a linear sensor module having a fixed housing, a piston movable within the housing in response to a pilot input, at least one biasing mechanism configured to cooperate with the piston to return the piston to a neutral position after the piston is moved in response to receipt of the pilot input, and a fly-by-wire input mounted to the piston to sense the movement of the piston indicative of the pilot input. The flight control is in communication with the fly-by-wire flight control system that converts the fly-by-wire-input into a command to control the at least one controllable component.

In addition to one or more of the features described above, in further embodiments the piston is movable along an axis within the housing.

In addition to one or more of the features described above, in further embodiments the fly-by-wire input includes a variable differential transformer.

In addition to one or more of the features described above, in further embodiments the fly-by-wire input is configured to monitor a distance and a direction of movement of the piston within the housing.

In addition to one or more of the features described above, in further embodiments the fly-by-wire input is configured to monitor a final position of the piston within the housing in response to the input.

In addition to one or more of the features described above, in further embodiments the at least one biasing mechanism is connected to an end of the housing and the piston.

In addition to one or more of the features described above, in further embodiments comprising a damping mechanism arranged within the hollow interior of the housing, the damping mechanism being associated with at least one of the piston and the at least one biasing mechanism.

In addition to one or more of the features described above, in further embodiments the linear sensor module applies a centering force to the flight control.

In addition to one or more of the features described above, in further embodiments the fly-by-wire input includes a variable displacement transformer.

In addition to one or more of the features described above, in further embodiments the linear sensor module is passive.

In addition to one or more of the features described above, in further embodiments the linear sensor module is active.

In addition to one or more of the features described in further embodiments the fly-by-wire input is operably coupled to the piston.

In addition to one or more of the features described above, in further embodiments the linear sensor module further comprises a damping mechanism associated with at least one of the piston and the at least one biasing mechanism.

In addition to one or more of the features described above, in further embodiments the flight control is a pedal system.

In addition to one or more of the features described above, in further embodiments the pedal system further comprises a first pedal and a second pedal linked to a support structure through a crank assembly, the crank assembly being pivotable relative to the support structure about a support axis.

In addition to one or more of the features described above, in further embodiments the piston is movable in a first direction within the housing in response to application of a force to the port pedal, and the piston is movable in a second, opposite direction within the housing in response to application of a force to the starboard pedal.

In addition to one or more of the features described above, in further embodiments comprising an actuator arm connected to the crank assembly, the piston being operably coupled to the crank assembly via the actuator arm.

In addition to one or more of the features described above, in further embodiments the flight control is a primary flight control operable to control one of yaw, roll, and pitch of the rotary wing aircraft.

The subject matter is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a general perspective view of an example of a rotary wing aircraft;
FIG. 2 is a perspective view of a fly-by-wire control system according to an embodiment;
FIG. 3 is a perspective view of a pedal system for use with the fly-by-wire control system of FIG. 2 according to an embodiment; and
FIG. 4 is a cross-sectional view of a linear sensor module for use with the pedal system according to an embodiment; and
FIG. 5 is a cross-sectional view of an active linear sensor module for use with the pedal system according to an embodiment.

The detailed description explains embodiments of the disclosure, together with advantages and features, by way of example with reference to the drawings.

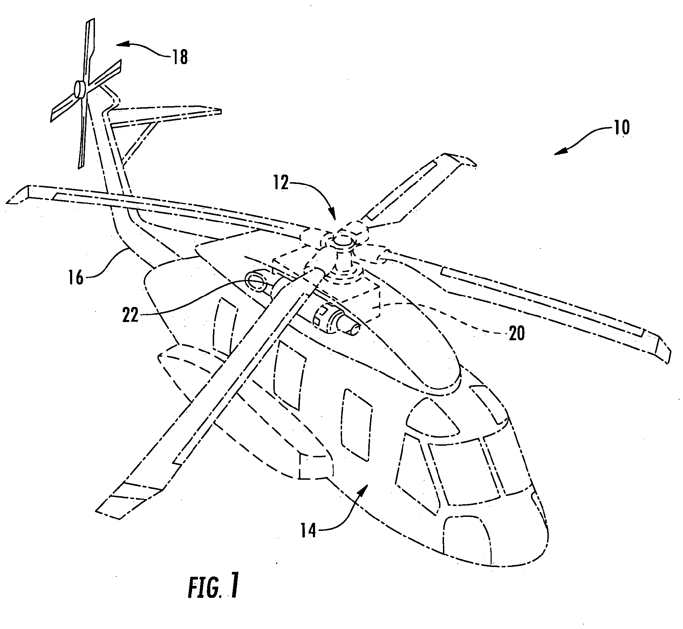

FIG. 1 schematically illustrates an example of a rotary wing aircraft 10, such as a helicopter for example, having a main rotor assembly 12. The rotary wing aircraft 10 includes an airframe having an extending tail which mounts an anti-torque tail rotor system 18. The main rotor assembly 12 and the anti-torque tail rotor system 18 are driven through a transmission, illustrated schematically at 20, by one or more engines, illustrated schematically at 22. Although a particular rotary wing aircraft configuration is illustrated and described in the disclosed embodiment, other configurations and/or machines, such as a high speed compound rotary wing aircraft with supplemental translational thrust systems, a dual contra-rotating, coaxial rotor system aircraft, and a turbo-prop, tilt-rotor or tilt-wing aircraft for example, will also benefit from the present disclosure.

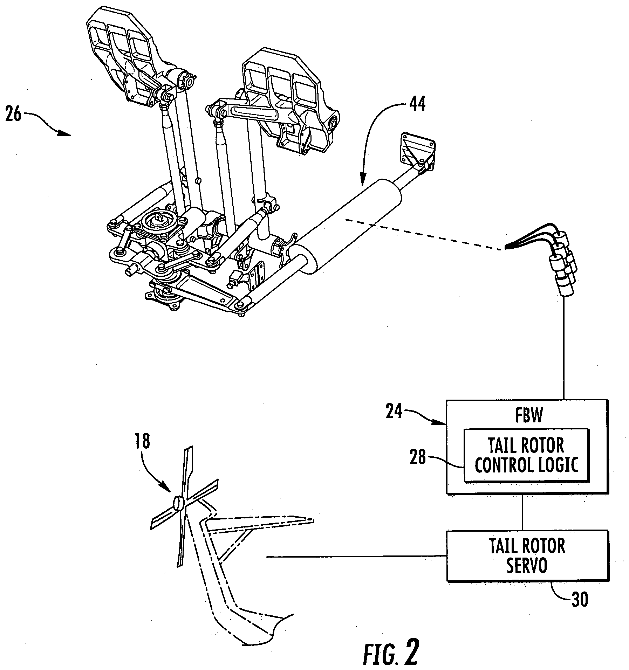

With reference now to FIG. 2, the anti-torque tail rotor system 18 is driven by an aircraft flight control system 24. The aircraft flight control system 24 is a fly-by-wire (FBW) flight control system that in one embodiment utilizes signals to convey pilot commands to one or more corresponding flight control servos coupled to a movable surface or component of the aircraft 10. In a FBW flight control system, a pilot provides an input through FBW tail rotor control logic to control the anti-torque tail rotor system 18. In an embodiment, the FBW flight control system 24 requires a control input only when a change in the yaw axis state is demanded. That is, the FBW control system 24 may be described as a "command response hold system."

The pilot's input is provided to the FBW flight control system 24 through an interface such as a pedal system 26. Since the anti-torque tail rotor system 18 is controlled through the FBW flight control system 24, the pedal system 26 need not be mechanically linked to the anti-torque tail rotor system 18. The pilot's input is communicated through the FBW yaw flight control logic 28 to drive, for example only, a tail rotor drive servo 30 which controls the pitch of the anti-torque tail rotor system 18. The FBW yaw flight control logic 28 typically utilizes aircraft rate and attitude response feedback directly to modify the pilot's input to yaw the aircraft 10 at a commanded rate and actively control the aircraft's response. As generally understood, FBW flight control systems may provide feedback mechanisms utilizing linear control system logic, such as proportional, integral, or derivative (PID) paths to achieve a desired response and the compensate for undesired destabilization forces acting on the aircraft in the particular axis. It should be understood that the FBW control logic theory may be provided to multiple flight control systems.

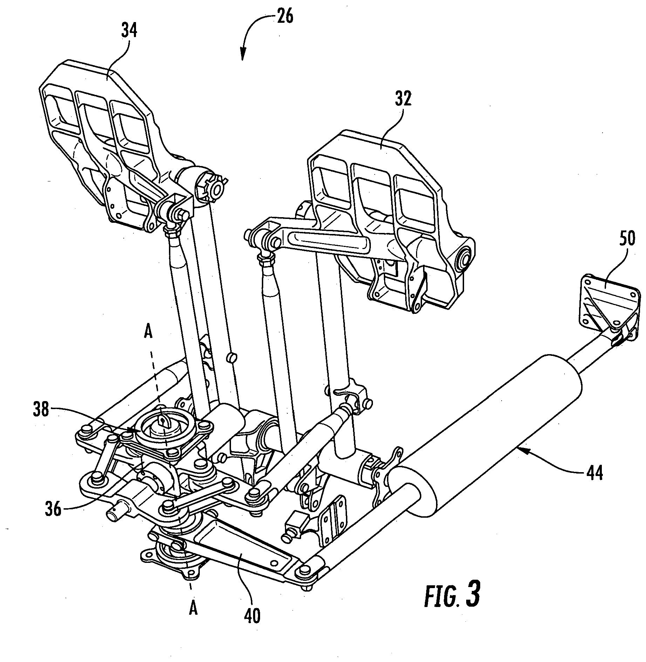

Referring now to FIG. 3, an example of a yaw pedal system 26 configured for use with a FBW flight control system 24 is illustrated. The pedal system 26 generally includes a relatively short travel port pedal 32 and a starboard pedal 34 which are linked to a support structure 36 through a crank assembly 38. Pressure on the port pedal 32 rotates the crank assembly 38 about a support axis A in a first direction and translates the starboard pedal 34 toward the pilot. Similarly, pressure applied to the starboard pedal 34 rotates the crank assembly 38 about a support axis A in an opposite direction and translates the port pedal 32 toward the pilot.

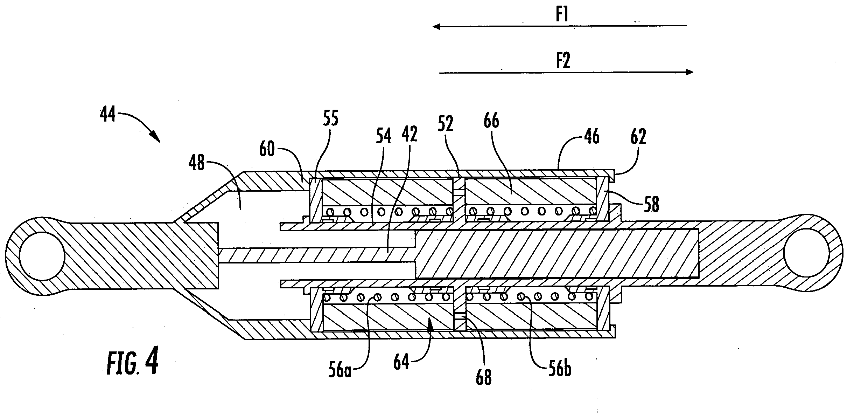

An output arm 40 is mounted to the crank assembly 38 for rotation about axis A therewith. The actuator arm 40 mechanically communicates motion of the pedals 32, 34 to the FBW control system 24 via a fly-by-wire input 42 (see FIGS. 4A and 4B). In the illustrated, non-limiting embodiment, the fly-by-wire input 42 includes a variable differential transformer associated with a linear sensor module 44.

An example of a linear sensor module 44 is shown in more detail in FIG. 4. The linear sensor module 44 includes a generally cylindrical housing 46 having a substantially hollow interior 48. The housing 46 is fixed relative to the yaw pedal system 26. In an embodiment, the housing 46 is fixed directly to a stationary portion of the pedal system 26, or alternatively, to an adjacent surface within the cockpit, such as an airframe bracket 50 shown in FIG. 3. A piston 52 is movably mounted within the hollow interior 48 of the housing 46. The piston 52 is operably coupled via a shaft 54 to output arm 40 and the crank assembly 38. Rotation of the crank assembly 38 in response to application of a force to one of the pedals 32, 34 results in a corresponding linear movement of the piston 52 within the housing 46. The fly-by-wire input 42, such as the variable differential transformer for example, is mounted to the piston 52, such as concentrically within an opening formed in the shaft 54 for example, to sense the movement of the piston 52 indicative of a pilot's command input to the pedal system 26.

Mounted concentrically with and adjacent a first end of the shaft 54 is a first spring tensioning plate 55. Similarly, mounted adjacent a portion of the housing adjacent an end of the housing is a second, spring tensioning plate 58. Movement of the first spring tensioning plate 55 in a first direction, indicated by arrow F1, is restricted by engagement with a shoulder or bore 60 formed in the housing 46. Similarly, movement of the second spring tensioning plate 58 in a second direction, indicated by arrow F2, is restricted by engagement with a shoulder of bore 62 formed in the housing 46.

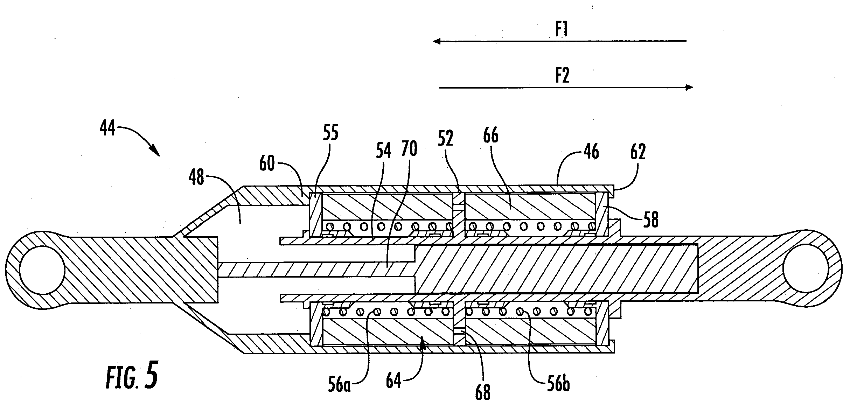

At least one biasing mechanism 56, such as a coil spring for example, is positioned within the hollow interior 48 of the housing 46. The at least one biasing mechanism 56 is configured to cooperate with the piston 52 to return the piston 52 to a neutral or zero load position after the piston 52 is moved in response to receipt of a command. In the illustrated non-limiting embodiment, as shown in FIGS. 4 and 5, the at least one biasing mechanism 56 includes a first biasing mechanism 56a arranged between the first spring tensioning plate 55 of the piston 52 and a second biasing mechanism 56b arranged between the piston 52 and the second spring tensioning plate 58. The first biasing mechanism 56a is configured to deflect in response to movement of the piston 52 in a first direction and the second biasing mechanism 56b is configured to deflect in response to movement of the piston 52 in the second, opposite direction. In such embodiments, the biasing mechanisms 56a, 56b may be substantially identical, or may have one or more varying characteristics, such as length, diameter, and spring rate for example.

The linear sensor module 44 may additionally include a damping mechanism 64 for regulating the speed of the piston 52 and/or at the least one biasing mechanism 56 between the zero load position and a commanded input position. For example, in an embodiment, the housing 46 may be filled with a damping fluid 66. The piston 52 may have one or more holes 68 formed therein such that the portion of the housing 46 between the piston 52 and the first spring tensioning plate 55 and the portion of the housing 46 between the piston 52 and the second spring tensioning plate 58 are in fluid communication. The viscosity of the damping medium 66 creates a drag on the piston 52 as it moves there through. Accordingly, the damping forces of the fluid acting on the piston 52 will depend in part on the speed of the movement of the piston 52. In another embodiment, the damping mechanism 64 may be a self-contained damper that is operably coupled to the spring 56 and/or the piston 52 to control movement thereof. The damping mechanism 64 illustrated and described herein is intended as an example only, and it should be understood that any suitable damping mechanism including both fluidic and electrical damping mechanisms are contemplated herein.

During operation of the aircraft 10, a pilot controls operation of the anti-torque tail rotor system 18 by providing an input to the pedal system 26. The pilot will apply a force to one of the port and starboard pedals 32, 34 causing the piston 52 to translate axially within the housing 46. When the shaft 54 is moved in a first direction indicated by arrow F1, the first biasing mechanism 56a is compressed between the piston 52 and the first spring tensioning plate 55. As the shaft and piston translate, the second tensioning plate 58 and the second biasing mechanism 56b are configured to move without any compression of the second biasing mechanism 56b. Accordingly, translation of the shaft 54 in the first direction compresses the first biasing mechanism 56a, but does not affect the second biasing mechanism 56b. Alternatively, when the shaft 54 is moved in a second, opposite direction indicated by arrow F2, the second biasing mechanism 56b is compressed between the piston 52 and the second spring tensioning plate 58. As the shaft 54 and piston 52 translate, the first tensioning plate 55 and the first biasing mechanism 56a are configured to move without compressing the first biasing mechanism 56a. Accordingly, translation of the shaft 54 in the second direction compresses the second biasing mechanism 56b, but does not affect the first biasing mechanism 56a.

The fly-by-wire input 42 coupled to the piston 52 will determine the distance and direction of movement of the piston 52 and/or a final position of the piston 52 driven by the movement of the pedals 32, 34. The input 42 is then supplied to the yaw flight control logic 28 where it is converted into a command and supplied to one or more servos 30 associated with the anti-torque tail rotor system 18. In embodiments where the linear sensor module 44 is passive, a pilot must maintain the control position to maintain a commanded state. It should be understood that although the linear sensor module 44 is described with respect to a pedal system 26, it should be understood that the module 44 may be adapted for use with any primary flight control input.

The linear sensor module 44 is illustrated and described herein as a passive system. However, embodiments where the linear sensor module 44 is configured as an active system are also contemplated herein. In such embodiments, the linear variable differential transformer is replaced by a linear actuator 70. The linear actuator may be operable to drive movement of the piston 52 in response to a signal received from the flight control system 24. In embodiments where the linear sensor module 44 is active, the pilot need not hold the pedals 32, 34 in a commanded position because the commanded state is maintained until another input is received. As a result, the biasing force of the at least one biasing mechanism 56 will act on the piston 52, thereby moving the piston 52, and the actuator arm 38 and pedals 32, 34 back to a zero load state. In an embodiment, the pedals 32, 34 are generally centered and/or aligned in the zero load state.

The linear sensor module 44 described herein is takes advantage of existing control system geometries by directly replacing the mechanical system pushrods associated with a pedal system 26. In addition, the linear sensor module 44 improves upon existing passive control devices by eliminating the gearing necessary to provide jam-proof operation and reduces the workload for the pilot.

While the disclosure has been described in detail in connection with only a limited number of embodiments, it should be readily understood that the disclosure is not limited to such disclosed embodiments. By way of example, aspects of the invention can be used with single rotor helicopters for the main and tail rotors, fixed wing aircraft propellers, drones, maritime propulsion systems, and wind/water turbine transmission. Additionally, while various embodiments of the disclosure have been described, it is to be understood that aspects of the disclosure may include only some of the described embodiments. Accordingly, the disclosure is not to be seen as limited by the foregoing description, but is only limited by the scope of the appended claims.

## Claims

1. A rotary wing aircraft (10) comprising:
at least one controllable component;
a fly-by-wire flight control system (24) for driving the at least one controllable component; and
a flight control including
a linear sensor module (44) having a fixed housing (46),
a piston (52) movable within the housing (46) in response to a pilot input,
at least one biasing mechanism configured to cooperate with the piston (52) to return the piston (52) to a neutral position after the piston (52) is moved in response to receipt of the pilot input, and
a fly-by-wire input (42) mounted to the piston (52) to sense the movement of the piston (52) indicative of the pilot input,
wherein the flight control is in communication with the fly-by-wire flight control system (24) that converts the fly-by-wire-input (42) into a command to control the at least one controllable component.

2. The rotary wing aircraft (10) of claim 1, wherein the piston (52) is movable along an axis within the housing (46).

3. The rotary wing aircraft (10) of one of claims 1 - 2, wherein the fly-by-wire input (42) includes a variable differential transformer or a variable displacement transformer.

4. The rotary wing aircraft (10) of one of claims 1 - 3, wherein the fly-by-wire input (42) is configured to monitor a distance and a direction of movement of the piston (52) within the housing (46), and/or wherein the fly-by-wire input (42) is configured to monitor a final position of the piston (52) within the housing (46) in response to the input.

5. The rotary wing aircraft (10) of one of claims 1 - 4, wherein the at least one biasing mechanism is connected to an end of the housing (46) and the piston (52).

6. The rotary wing aircraft (10) of one of claims 1 - 5, wherein the linear sensor module (44) further comprises a damping mechanism arranged within the hollow interior of the housing (46), the damping mechanism being associated with at least one of the piston (52) and the at least one biasing mechanism.

7. The rotary wing aircraft (10) of one of claims 1 to 6, wherein the linear sensor module (44) applies a centering force to the flight control.

8. The rotary wing aircraft (10) of one of claims 1 - 7, wherein the linear sensor module (44) is passive, or wherein the linear sensor module (44) is active.

9. The rotary wing aircraft (10) of one of claims 1 - 8, wherein the fly-by-wire input (42) is operably coupled to the piston.

10. The rotary wing aircraft of one of claims 1 - 9, wherein the flight control includes a pedal system, particularly wherein the pedal system further comprises a first pedal and a second pedal linked to a support structure through a crank assembly, the crank assembly being pivotable relative to the support structure about a support axis, particularly wherein the piston is movable in a first direction within the housing in response to application of a force to the first pedal, and the piston is movable in a second, opposite direction within the housing in response to application of a force to the second pedal, optionally further comprising an actuator arm connected to the crank assembly, the piston being operably coupled to the crank assembly via the actuator arm.

11. The rotary wing aircraft of one of claims 1 - 10, wherein the flight control is a primary flight control operable to control one of yaw, roll, and pitch of the rotary wing aircraft.

## Patentansprüche

1. Drehflügelluftfahrzeug (10), umfassend:
mindestens eine steuerbare Komponente;
ein Fly-by-Wire-Flugsteuerungssystem (24), zum Antreiben der mindestens einen steuerbaren Komponente; und
eine Flugsteuerung, beinhaltend
ein lineares Sensormodul (44), das ein festes Gehäuse (46) aufweist,
einen Kolben (52), der als Reaktion auf einen Piloteingang innerhalb des Gehäuses (46) bewegbar ist,
mindestens einen Vorspannmechanismus, der dazu konfiguriert ist, mit dem Kolben (52) zusammenzuarbeiten, um den Kolben (52) in eine neutrale Position zurückzubringen, nachdem der Kolben (52) als Reaktion auf den Empfang des Piloteingangs bewegt wurde, und
einen Fly-by-Wire-Eingang (42), der auf den Kolben (52) montiert ist, um die Bewegung des Kolbens (52), die auf dem Piloteingang hinweist, zu erfassen,
wobei die Flugsteuerung in Kommunikation mit dem Fly-by-Wire-Flugsteuerungssystem (24) steht, das den Fly-by-Wire-Eingang (42) in einen Befehl umwandelt, um die mindestens eine steuerbare Komponente zu steuern.

2. Drehflügelluftfahrzeug (10) nach Anspruch 1, wobei der Kolben (52) entlang einer Achse innerhalb des Gehäuses (46) bewegbar ist.

3. Drehflügelluftfahrzeug (10) nach einem der Ansprüche 1-2, wobei der Fly-by-Wire-Eingang (42) einen variablen Differentialtransformator oder einen variablen Wegtransformator beinhaltet.

4. Drehflügelluftfahrzeug (10) nach einem der Ansprüche 1-3, wobei der Fly-by-Wire-Eingang (42) dazu konfiguriert ist, einen Abstand und eine Bewegungsrichtung des Kolbens (52) innerhalb des Gehäuses (46) zu überwachen, und/oder wobei der Fly-by-Wire-Eingang (42) dazu konfiguriert ist, eine Endposition des Kolbens (52) innerhalb des Gehäuses (46) als Reaktion auf den Eingang zu überwachen.

5. Drehflügelluftfahrzeug (10) nach einem der Ansprüche 1-4, wobei der mindestens eine Vorspannmechanismus mit einem Ende des Gehäuses (46) und dem Kolben (52) verbunden ist.

6. Drehflügelluftfahrzeug (10) nach einem der Ansprüche 1-5, wobei das lineare Sensormodul (44) ferner einen Dämpfungsmechanismus umfasst, der innerhalb des hohlen Inneren des Gehäuses (46) angeordnet ist, wobei der Dämpfungsmechanismus mit mindestens einem des Kolbens (52) und des mindestens einen Vorspannmechanismus assoziiert ist.

7. Drehflügelluftfahrzeug (10) nach einem der Ansprüche 1 bis 6, wobei das lineare Sensormodul (44) eine Zentrierkraft auf die Flugsteuerung anwendet.

8. Drehflügelluftfahrzeug (10) nach einem der Ansprüche 1-7, wobei das lineare Sensormodul (44) passiv ist oder wobei das lineare Sensormodul (44) aktiv ist.

9. Drehflügelluftfahrzeug (10) nach einem der Ansprüche 1-8, wobei der Fly-by-Wire-Eingang (42) mit dem Kolben wirkverbunden ist.

10. Drehflügelluftfahrzeug nach einem der Ansprüche 1-9, wobei die Flugsteuerung ein Pedalsystem beinhaltet, wobei das Pedalsystem insbesondere ferner ein erstes Pedal und ein zweites Pedal umfasst, die durch eine Kurbelanordnung mit einer Trägerstruktur verbunden sind, wobei die Kurbelanordnung in Bezug auf die Trägerstruktur um eine Trägerachse schwenkbar ist, wobei der Kolben insbesondere in eine erste Richtung innerhalb des Gehäuses als Reaktion auf die Anwendung einer Kraft auf das erste Pedal bewegbar ist und der Kolben in einer zweiten, entgegengesetzten Richtung innerhalb des Gehäuses als Reaktion auf die Anwendung einer Kraft auf das zweite Pedal bewegbar ist und ferner optional einen Betätigungsarm umfasst, der mit der Kurbelanordnung verbunden ist, wobei der Kolben über den Betätigungsarm mit der Kurbelanordnung wirkverbunden ist.

11. Drehflügelluftfahrzeug nach einem der Ansprüche 1-10, wobei die Flugsteuerung eine primäre Flugsteuerung ist, die betätigbar ist, um eines von Gierung, Längs- und Querneigung des Drehflügelluftfahrzeugs zu steuern.

## Revendications

1. Avion à voilure tournante (10) comprenant :
au moins un composant pouvant être commandé ;
un système de commande de vol électrique (24) pour entraîner l'au moins un composant pouvant être commandé ; et
une commande de vol comportant
un module de capteur linéaire (44) ayant un boîtier fixe (46),
un piston (52) mobile à l'intérieur du boîtier (46) en réponse à une entrée de pilote,
au moins un mécanisme de sollicitation configuré pour coopérer avec le piston (52) pour renvoyer le piston (52) vers une position neutre après le déplacement du piston (52) en réponse à la réception de l'entrée de pilote, et
une entrée de commande de vol électrique (42) montée sur le piston (52) pour détecter le déplacement du piston (52) indiquant l'entrée de pilote,
dans lequel la commande de vol est en communication avec le système de commande de vol électrique (24) qui convertit l'entrée de commande de vol électrique (42) en une commande pour commander l'au moins un composant pouvant être commandé.

2. Avion à voilure tournante (10) selon la revendication 1, dans lequel le piston (52) est mobile le long d'un axe à l'intérieur du boîtier (46).

3. Avion à voilure tournante (10) selon l'une des revendications 1 à 2, dans lequel l'entrée de commande de vol électrique (42) comporte un transformateur différentiel variable ou un transformateur de déplacement variable.

4. Avion à voilure tournante (10) selon l'une des revendications 1 à 3, dans lequel l'entrée de commande de vol électrique (42) est configurée pour surveiller une distance et une direction de déplacement du piston (52) à l'intérieur du boîtier (46), et/ou dans lequel l'entrée de commande de vol électrique (42) est configurée pour surveiller une position finale du piston (52) à l'intérieur du boîtier (46) en réponse à l'entrée.

5. Avion à voilure tournante (10) selon l'une des revendications 1 à 4, dans lequel l'au moins un mécanisme de sollicitation est relié à une extrémité du boîtier (46) et du piston (52).

6. Avion à voilure tournante (10) selon l'une des revendications 1 à 5, dans lequel le module de capteur linéaire (44) comprend en outre un mécanisme d'amortissement agencé à l'intérieur de l'intérieur creux du boîtier (46), le mécanisme d'amortissement étant associé à au moins l'un du piston (52) et de l'au moins un mécanisme de sollicitation.

7. Avion à voilure tournante (10) selon l'une des revendications 1 à 6, dans lequel le module de capteur linéaire (44) applique une force de centrage sur la commande de vol.

8. Avion à voilure tournante (10) selon l'une des revendications 1 à 7, dans lequel le module de capteur linéaire (44) est passif, ou dans lequel le module de capteur linéaire (44) est actif.

9. Avion à voilure tournante (10) selon l'une des revendications 1 à 8, dans lequel l'entrée de commande de vol électrique (42) est couplée de manière fonctionnelle au piston.

10. Avion à voilure tournante selon l'une des revendications 1 à 9, dans lequel la commande de vol comporte un système de pédale, en particulier dans lequel le système de pédale comprend en outre une première pédale et une seconde pédale reliées à une structure de support à travers un ensemble manivelle, l'ensemble manivelle pouvant pivoter par rapport à la structure de support autour d'un axe de support, en particulier dans lequel le piston est mobile dans une première direction à l'intérieur du boîtier en réponse à l'application d'une force sur la première pédale, et le piston est mobile dans une seconde direction opposée à l'intérieur du boîtier en réponse à l'application d'une force sur la seconde pédale, comprenant en outre éventuellement un bras d'actionneur relié à l'ensemble manivelle, le piston étant couplé de manière fonctionnelle à l'ensemble manivelle par l'intermédiaire du bras d'actionneur.

11. Avion à voilure tournante selon l'une des revendications 1 à 10, dans lequel la commande de vol est une commande de vol principale pouvant fonctionner pour commander un lacet, un roulis et un tangage de l'avion à voilure tournante.
